# EUROPÄISCHE PATENTANMELDUNG

(11) **EP 4 636 512 A1**
(43) Veröffentlichungstag der Anmeldung: **22.10.2025**
(21) Anmeldenummer: 24171183.7
(22) Anmeldetag: 19.04.2024
(51) Int. Cl.: G05B 19/042, G05B 19/05

(54) **DIGITALEINGABEBAUGRUPPE**

(71) Anmelder: Siemens Aktiengesellschaft, 80333 München (DE)
(72) Erfinder: Augustin, Markus, 92253 Schnaittenbach (DE); Grosser, Stefan, 92253 Schnaittenbach (DE); Grünewald, Uwe, 90559 Burgthann (DE); Hirmer, Gerald, 92708 Mantel (DE); Seefried, Martin, 90411 Nürnberg (DE); Weikert, Robert, 92342 Burggriesbach (DE)
(74) Vertreter: Siemens Patent Attorneys

(57) **Zusammenfassung**

Die Erfindung betrifft eine Digitaleingabebaugruppe für ein Automatisierungsgerät umfassend:
- eine als Digitaleingang fungierende Eingangsklemme (E1,E2,E3),
- einen Masseanschluss (M),
- ein Erkennungsmittel (PE) mit einem Eingang (1,2,3) für ein an dem Eingang (1,2,3) anliegendes Eingangssignal (11,12,13), ausgestaltet einen Logikpegel des über die Eingangsklemme (E1,E2,E3) an dem Eingang (1,2,3) anliegenden Signals zu erkennen, weiterhin aufweisend einen Pegelausgang (P1,P2,P3) an dem der erkannte Logikpegel ausgeben wird,
wobei zur Vermeidung von fehlerhaft erkannten Logikpegeln zwischen der Eingangsklemme (E1,E2,E3) und dem Masseanschluss (M) vor dem Eingang (1,2,3) zum einen eine erste Diode (D1,D2,D3) in Reihe mit einer ersten Suppressordiode (D4) und zum anderen eine erste Gegendiode (D11,D22,D33) in Reihe mit einer zweiten Suppressordiode (D3) geschaltet ist, wodurch ein erster Schutzpfad (S1) für eine positive Störeinkopplung und ein zweiter Schutzpfad (S2) für eine negative Störeinkopplung realisiert ist, und zusätzlich zwischen der Eingangsklemme (E1,E2,E3) und den Dioden ein Vorwiderstand (R11,R12) zu Strombegrenzung angeordnet ist.

## Beschreibung

Die Erfindung betrifft eine Digitaleingabebaugruppe für ein Automatisierungsgerät umfassend:
eine als Digitaleingang fungierende Eingangsklemme, einen Masseanschluss, ein Erkennungsmittel mit einem Eingang für ein an dem Eingang anliegendes Eingangssignal ausgestaltet einen Logikpegel des über die Eingangsklemme an dem Eingang anliegenden Signals zu erkennen, weiterhin weist das Erkennungsmittel einen Pegelausgang auf, an dem der erkannte Logikpegel ausgegeben wird.

Automatisierungsgeräte, insbesondere in einer Ausführungsform als modulare Automatisierungsgeräte, sind allgemein bekannt, z.B. in Form der Automatisierungsgeräte, die von der Anmelderin unter der Marke SIMATIC angeboten werden.

Aus diesen Automatisierungsgeräten sind auch als Einzelmodule ausgeführte Digitaleingabebaugruppen bekannt.

Die Erfindung bezieht sich speziell auf eine Schaltungsanordnung mit mindestens einem als Digitaleingang fungierenden Eingangsanschluss für eine Peripheriebaugruppe.

Bei einer solchen Schaltungsanordnung bzw. bei einer solchen Peripheriebaugruppe handelt es sich entsprechend um eine Peripheriebaugruppe mit Digitaleingabe-Funktionalität. Solche Baugruppenwerden häufig mit einer Mehrzahl, z.B. 16 oder 32 Digitaleingängen ausgeführt und entsprechend als Digitaleingabebaugruppe bezeichnet. Die Digitaleingabebaugruppe ist also eine Sonderform einer Peripheriebaugruppe mit ausschließlich digitaler Eingabefunktionalität.

Die EP 3 333 656 B1 beschreibt eine solche Digitaleingabebaugruppe, von Nachteil bei der bekannten Digitaleingabebaugruppe ist es, dass sie insbesondere bei Burst-Störungen einen Signalpegel nicht mehr sicher erkennen können.

Die Aufgabe der vorliegenden Erfindung ist es eine Baugruppe zur Verfügung zu stellen, welche auch bei elektrischen Störungen von außen die Logikpegel noch sicher erkennt.

Die Aufgabe wird dadurch gelöst, dass zur Vermeidung von fehlerhaft erkannten Logikpegeln zwischen der Eingangsklemme und dem Masseanschluss vor dem Eingang zum einen eine erste Diode in Reihe mit einer ersten Suppressordiode und zum anderen eine erste Gegendiode in Reihe mit einer zweiten Suppressordiode geschaltet ist, wodurch ein erster Schutzpfad für eine positive Störeinkopplung und ein zweiter Schutzpfad für eine negative Störeinkopplung realisiert ist, zusätzlich ist zwischen der Eingangsklemme und den Dioden ein Vorwiderstand (R11,R12) zu Strombegrenzung angeordnet.

Im Sinne der Erfindung ist unter Störeinkopplung beispielsweise ein "Burst" zu verstehen. Um eine gewisse Störfestigkeit zu prüfen, wird beispielsweise eine Burstprüfung durchgeführt. Die Prüfung wird mit wiederkehrenden schnellen Transienten und mit Impulspaketen (Bursts) durchgeführt, die aus einer Anzahl von schnellen transienten elektrischen Störgrößen bestehen, die an Stromversorgungs-, Steuer- und Signal- sowie Erdungs- bzw. Masseanschlüssen von elektrischen Geräten eingekoppelt werden. Kennzeichnend für diese Prüfung sind die hohen Amplituden, die kurze Anstiegszeit, die hohe Wiederholfrequenz und die niedrige Energie der Transienten. Die Prüfung ist dafür vorgesehen, die Störfestigkeit von elektrischen Geräten nachzuweisen, wenn diese bestimmten Arten von transienten Störgrößen ausgesetzt werden, wie sie aus kurzzeitigen Schalthandlungen Unterbrechung von induktiven Lasten oder Prellen von Relaiskontakten herrühren.

Die oben genannte Eingangsbeschaltung verringert eine Kapazität eines Ableitpfades, wobei dieser in der Regel zwischen der Eingangsklemme und dem Masseanschluss aufgespannt wird. Schutzelemente gegen transiente Störspannungen wie z.B. TVS-Dioden oder Suppressordioden bilden häufig aufgrund ihrer internen Struktur parasitäre Kapazitäten nach, und diese sind gerade für sehr schnelle Signale nicht mehr zu vernachlässigen. Daher sind getrennte Schutzpfade für positive und negative Störungen vorgesehen.

Im Sinne von "schnellen Digitaleingängen" ist es erstrebenswert die Kapazität klein zu halten, ansonsten wird in Verbindung mit einem Vorwidertand das Eingangssignal zu stark verzögert und dann hat man eben keinen schnellen Eingang mehr.

Durch die Diode und die zusätzliche Gegendiode wird in jedem Pfad eine kleine Kapazität in Serie zur großen Kapazität der Suppressordiode geschaltet. Eine resultierende Kapazität ist damit kleiner als die schon kleine Kapazität der Diode bzw. Gegendiode. Auch wenn dieser Pfad nun doppelt ausgeführt wird, ist die resultierende Kapazität noch immer viel kleiner, als wenn nur eine einfache, bidirektionale Suppressordiode verwendet. Die Schutzwirkung bleibt trotzdem erhalten.

Zusätzlich ist ein Vorwiderstand zu Strombegrenzung angeordnet, diese wird durch die Forderung für einen Brandschutz notwendig. Angenommen es wäre kein Vorwidertand Vorhanden und es tritt der Fehler auf, dass die Suppressordiode einen Kurzschluss hat. Wenn jetzt am Digitaleingang eine Spannung von 24V angelegt wird, fließt der Strom ohne eine Strombegrenzung durch die Diode nach Masse. So eine Realisierung ist nicht zulässig, wegen des Brandschutzes.

Besonders vorteilhaft ist es, wenn der Vorwiderstand als ein erster Widerstand und ein zweiter Widerstand mit jeweils 220 Ohm ausgestaltet ist.

Erfindungsgemäß ist die Dimensionierung des Widerstandswertes des ersten Widerstands und des zweiten Widerstands entscheidend, denn wenn der Wert hoch ist (z.B. 1,5 kOhm), ist der Logikpegel bei Beeinflussung durch Burst für etwa 6µs fehlerhaft. Wenn der Wert niedrig ist (z.B. 440 Ohm), ist der Logikpegel bei Beeinflussung durch Burst für etwa 1µs fehlerhaft. Die Störspannung wird dabei mit einem Widerstand von 440 Ohm belastet. Diese "niederohmige" Belastung bewirkt, dass die Störenergie in kurzer Zeit abgeführt wird.

Der Logikpegel wird somit nur für eine kurze Zeit beeinflusst. Eine nachgelagerte Digitalfilterung kann die Störung dann herausfiltern.

Bei der Aufteilung auf 2x 220 Ohm ist es von Vorteil, dass sich die Leistung einer Surge-Beanspruchung mit 1kV besser auf zwei Widerstände aufteilt. Hier ist es dann vorteilhaft, zwei Widerstände mit Bauform 2010 in Reihe zu schalten.

Die Digitaleingabebaugruppe wird weiter verbessert, wenn dem Erkennungsmittel ein Filtermittel nachgeschaltet ist und der Pegelausgang an einen Filtereingang des Filtermittels geschaltet ist. Das Filtermittel ist ausgestaltet, auf den erkannten Logikpegel eine digitale Eingangsfilterung mittels eines Verzögerungsgliedes durchzuführen.

Es steht nun eine Funktion zur Unterdrückung eingekoppelter Störungen bereit. Es kann eine Eingangsverzögerung für einen Digitaleingang eingestellt werden. Störimpulse, deren Impulszeit kleiner als die eingestellte Eingangsverzögerung (in ms oder µs) ist, werden unterdrückt.

Das Filtermittel ist vorteilhafterweise ausgestaltet, dass es hinsichtlich einer Verzögerungszeit von einem Engineeringsystem parametrierbar ist und damit kann die Eingangsverzögerung auch aus der Ferne eingestellt werden.

Mit Vorteil muss bei einer Mehrzahl von Eingangsklemmen zwar jede Eingangsklemme eine Diode und eine Gegendiode aufweisen, aber es kann für die Reihenschaltung jeweils eine gemeinsame erste Suppressordiode und eine gemeinsame zweite Suppressordiode genutzt werden.

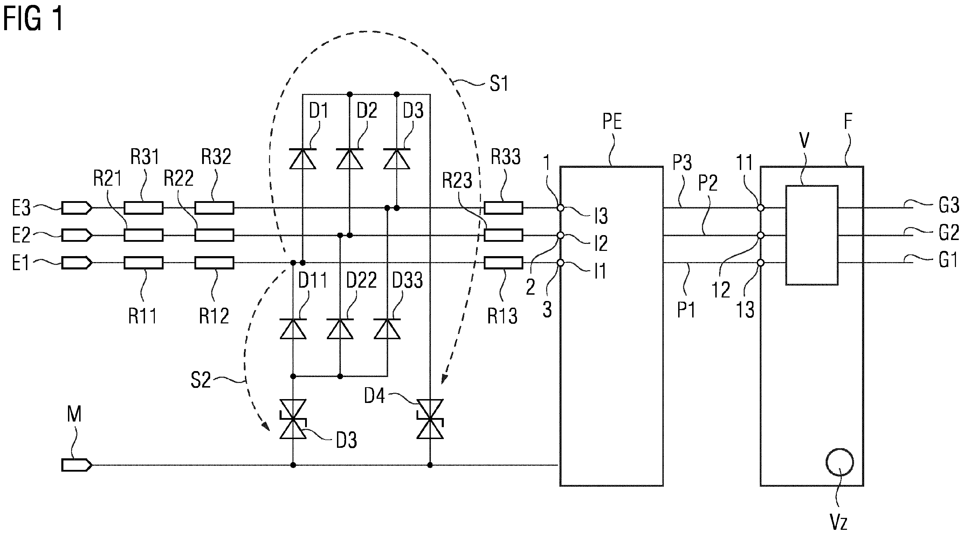

Die Zeichnung zeigt ein Ausführungsbeispiel der Erfindung.

Die FIG zeigt eine Digitaleingabebaugruppe mit einer ersten Eingangsklemme E1, einer zweiten Eingangsklemme E2 und einer dritten Eingangsklemme E3 und einen Masseanschluss M. Den Eingangsklemmen E1,E2,E3 sind jeweils ein erster Widerstand R11, R21, R31 und ein zweiter Widerstand R12, R22, R32 als Vorwiderstände zu Strombegrenzung nachgeschaltet.

Ein Erkennungsmittel PE mit einem ersten Eingang 1, einen zweiten Eingang 2 und einem dritten ersten Eingang 3 für anliegende Eingangssignale ist ausgestaltet einen Logikpegel des über die Eingangsklemmen E1,E2,E3 an dem Eingängen 1,2,3 anliegenden Signals zu erkennen, weiterhin weist das Erkennungsmittel PE je einen Pegelausgang P1,P2,P3 auf, an dem der erkannte Logikpegel ausgegeben wird.

Jedem Eingang 1,2,3 ist zum einen eine erste Diode D1,D2,D3 in Reihe mit einer ersten Suppressordiode D3 und zum anderen eine erste Gegendiode D11,D22,D33 in Reihe mit einer zweiten Suppressordiode D4 zugeordnet. Dadurch wird ein erster Schutzpfad S1 für eine positive Störeinkopplung und ein zweiter Schutzpfad S2 für eine negative Störeinkopplung realisiert.

Dem Erkennungsmittel PE ist ein Filtermittel F nachgeschaltet und der Pegelausgang P1,P2,P3 ist dementsprechend an ein Filtereingang 11,12,13 des Filtermittel F geschaltet. Das Filtermittel F ist ausgestaltet auf den erkannten Logikpegel eine digitale Eingangsfilterung mittels eines Verzögerungsgliedes V durchzuführen und das gefilterte Signal als gefiltertes Eingangssignal G1,G2,G3 auszugeben.

Das Filtermittel F kann hinsichtlich einer Verzögerungszeit Vz von einem Engineeringsystem parametriert werden.

Das Verzögerungsgliedes V funktioniert beispielhaft folgendermaßen: Es weist einen Zähler auf. Dieser Zähler geht von 0 bis 50. Der Zähler wird mit 10ns getaktet. Das Eingangssignal wird damit 50* 10ns = 500ns gefiltert.

Wenn der Logikpegel = 1, also der Pegelausgang P1,P2,P3 = 1 ist, wird der Zähler alle 10ns um 1 erhöht, bis er 50 erreicht hat. Wenn Zähler = 50, dann bleibt er auf 50.
...46...47...48...49...50...50...50...

Wenn der Logikpegel = 0 ist:
Zähler wird um 1 verringert, bis er 0 erreicht.

Wenn Zähler = 0, dann bleibt er auf 0.
...4...3...2...1...0...0...0

Wenn der Zähler einmal 50 erreicht hat, setzt er das gefiltertes Eingangssignal auf 1 und bleibt auf 50 stehen.

Wenn durch eine Störung der Logikpegel fehlerhaft auf 0 geht, beginnt der Zähler von 50 herunterzuzählen.

Z.B. bis 40. Ist die Störung des Logikpegels vorbei und er liegt wieder auf 1, zählt der Zähler wieder hoch von 40 auf 50. Während dieser Störung für 10 Takte, bleibt das gefiltertes Eingangssignal durchgehend auf 1. Die Störung des Logikpegel wird damit unterdrückt.

Die Filterzeit lässt sich sehr gut einstellen, indem der Maximalwert des Zählers beliebig festgelegt werden kann.

Z.B. Maximalstand =5000: Dann ist 5000*10ns = 50us die Filterzeit.

Zusammenfassend kann gesagt werde, dass es "langsame" Digitaleingänge, mit Eingangsverzögerungen von 50us bis 20ms gibt, bei denen können die Digitaleingänge mit ungeschirmten Leitungen angeschlossen werden.

Es gibt jetzt auch erfindungsgemäß einen "schnellen" Digitaleingang beschrieben, mit Eingangsverzögerung von 1us bis 20ms.

Bei Eingangsverzögerung 1us bis 50us müssen die Digitaleingänge mit geschirmten Leitungen angeschlossen werden. Bei Eingangsverzögerung >50us bis 20ms können die Digitaleingänge mit ungeschirmten Leitungen angeschlossen werden. Die Verdrahtung ist für den Anwender kostengünstiger und einfacher zu realisieren, wenn er ungeschirmte Leitungen verwenden kann.

Erfindungsgemäß kann der "schnelle" Digitaleingang jetzt auch im Bereich unter 50µs ohne geschirmte Verdrahtung eingesetzt werden.

## Patentansprüche

1. Digitaleingabebaugruppe für ein Automatisierungsgerät umfassend:
- eine als Digitaleingang fungierende Eingangsklemme (E1,E2,E3),
- einen Masseanschluss (M),
- ein Erkennungsmittel (PE) mit einem Eingang (1,2,3) für ein an dem Eingang (1,2,3) anliegendes Eingangssignal (I1,I2,I3) ausgestaltet einen Logikpegel des über die Eingangsklemme (E1,E2,E3) an dem Eingang (1,2,3) anliegenden Signals zu erkennen, weiterhin weist das Erkennungsmittel (PE) einen Pegelausgang (P1,P2,P3) an dem der erkannte Logikpegel ausgeben wird,
**dadurch gekennzeichnet, dass** zur Vermeidung von fehlerhaft erkannten Logikpegeln zwischen der Eingangsklemme (E1,E2,E3) und dem Masseanschluss (M) vor dem Eingang (1,2,3) zum einen eine erste Diode (D1,D2,D3) in Reihe mit einer ersten Suppressordiode (D3) und zum anderen eine erste Gegendiode (D11,D22,D33) in Reihe mit einer zweiten Suppressordiode (D4) geschaltet ist, wodurch ein erster Schutzpfad (S1) für eine positive Störeinkopplung und ein zweiter Schutzpfad (S2) für eine negative Störeinkopplung realisiert ist, zusätzlich ist zwischen der Eingangsklemme (E1,E2,E3) und den Dioden ein Vorwiderstand (R11,R12) zu Strombegrenzung angeordnet.

2. Digitaleingabebaugruppe nach Anspruch 1, wobei der Vorwiderstand als ein erster Widerstand (R11) und ein zweiter Widerstand (R12) mit jeweils 220 Ohm ausgestaltet sind.

3. Digitaleingabebaugruppe nach Anspruch 1, wobei dem Erkennungsmittel (PE) ein Filtermittel (F) nachgeschaltet ist und der Pegelausgang (P1,P2,P3) an ein Filtereingang (11,12,13) des Filtermittel (F) geschaltet ist, das Filtermittel (F) ist ausgestaltet auf den erkannten Logikpegel eine digitale Eingangsfilterung mittels eines Verzögerungsgliedes (V) durchzuführen und das gefilterte Signal als gefiltertes Eingangssignal (G1,G2,G3).

4. Digitaleingabebaugruppe nach Anspruch 3, wobei das Filtermittel (F) ausgestaltet ist, dass es hinsichtlich einer Verzögerungszeit von einem Engineeringsystem parametrierbar ist.

5. Digitaleingabebaugruppe nach einem der Ansprüche 1 bis 4, wobei bei einer Mehrzahl von Eingangsklemmen (E1,E2,E3),
zwar jeder Eingangsklemme (E1,E2,E3) eine Diode (D1,D2,D3) und eine Gegendiode (D11,D22,D33) zugeordnet ist, aber für die Reihenschaltung nur die erste Suppressordiode (D3) und zweite Suppressordiode (D4) vorhanden ist.
